# EUROPEAN PATENT SPECIFICATION

(11) **EP 3 908 867 B1**
(45) Date of publication and mention of the grant of the patent: **30.04.2025**
(21) Application number: 20738611.1
(22) Date of filing: 10.01.2020
(51) Int. Cl.: G02B 6/38

(54) **FIBER OPTICAL CONNECTOR**
GLASFASERVERBINDER
CONNECTEUR DE FIBRE OPTIQUE

(30) Priority: 10.01.2019 US 201962790503 P
(43) Date of publication of application: 17.11.2021
(73) Proprietor: PPC Broadband, Inc., East Syracuse, NY 13057 (US)
(72) Inventor: CRAWFORD, William, Syracuse, NY 13208 (US)
(74) Representative: PGA S.p.A., Milano, Succursale di Lugano
(86) International application number: PCT/US2020/013239
(87) International publication number: WO 2020/146841

(56) References cited:
- US-A- 5 212 752
- US-A- 5 287 425
- US-A- 5 809 192
- US-A- 5 909 526
- US-A1- 2006 193 562
- US-A1- 2010 215 321
- US-A1- 2015 016 780
- US-A1- 2018 217 335

## Description

### TECHNICAL FIELD

The present disclosure is directed to a fiber optical connector that attaches a connector sub-assembly to an optical fiber cable without the use of an outer clamp shell. More particularly, a fiber optical connector includes a one-piece inner housing that connects the connector sub-assembly to the optical fiber cable.

### BACKGROUND

Fiber optical communication systems typically use a network of fiber optic cables to transmit large volumes of data. Typical fiber optical connectors include a ferrule that supports an end portion of an optical fiber. When two fiber optical connectors are interconnected, end faces of the ferrules, on each connector, directly oppose one another. Thus, the optical fibers, which are supported by each ferrule, are also directly opposed to each other. Furthermore, springs in each connector bias the optical fibers towards each other when the connectors are in this interconnected state. An optical signal can then be transmitted from one optical fiber to the other optical fiber.

Traditionally, the ferrule may be disposed in a ferrule holder carrier, which is then secured to an outer barrel. Conventional outer barrels include a clamp shell arrangement in order to easily fit the barrel around and over the ferrule holder carrier and the cable. Thus, the clamp shell may open in order to move the barrel over and around these components. An outer housing may then be disposed over the clamp shell in order to provide a secure and stable connector assembly. <INSERT PAGE 1A>

Document US2010215321A1 discloses an optical fiber connector comprising an inner housing, an outer housing and a ferrule assembly.

Document US5809192A1 discloses an optical fiber connector comprising an inner housing, an outer housing, a ferrule assembly and a sleeve.

It may be desirable to provide a hardened optical fiber connector that overcomes one or more problems of conventional prior art connectors that are recognized by persons having ordinary skill in the art.

### SUMMARY

A fiber optic connector according to the invention is disclosed in any one of the claims 1-13.

### BRIEF DESCRIPTION OF THE DRAWINGS

Features and advantages of the present disclosure are described in, and will be apparent from, the following Brief Description of the Drawings and Detailed Description.
FIG. 1 is a perspective view of an exemplary hardened fiber optic connector in accordance with various aspects of the disclosure.
FIG. 2 is a top cross-sectional view of the exemplary connector of FIG. 1.
FIG. 3 is a perspective view of the inner housing of the exemplary connector of FIG. 1.
FIG. 4 is a side cross-sectional view of the inner housing of FIG. 3.
FIG. 5 is a top view of the inner housing of FIG. 3.
FIG. 6 is an exploded perspective view of the exemplary connector of FIG. 1.
FIG. 7 is a side view of the connector sub-assembly and crimp sleeve of the exemplary connector of FIG. 1.
FIG. 8 is an enlarged cross-sectional view of the connector sub-assembly of the exemplary connector of FIG. 1.
FIG. 9 is a perspective view of another exemplary hardened fiber optic connector in accordance with various aspects of the disclosure.
FIG. 10 is a side view of the exemplary connector of FIG. 9.
FIG. 11 is a perspective view of another exemplary hardened fiber optic connector in accordance with various aspects of the disclosure.
FIG. 12 is a side cross-sectional view of the exemplary connector of FIG. 11.
FIG. 13 is an exploded perspective view of the inner housing of the exemplary connector of FIG. 11.
FIG. 14 is a perspective view of the inner housing and the connector sub-assembly of the exemplary connector of FIG. 11.
FIG. 15 is a side cross-sectional view of the inner housing and the connector sub-assembly of FIG. 14.

### DETAILED DESCRIPTION OF EMBODIMENTS

Throughout the description, like reference numerals will refer to like parts in the various drawing figures. As a preface to the detailed description, it should be noted that, as used in this specification and the appended claims, the singular forms "a," "an," and "the" include plural referents, unless the context clearly dictates otherwise.

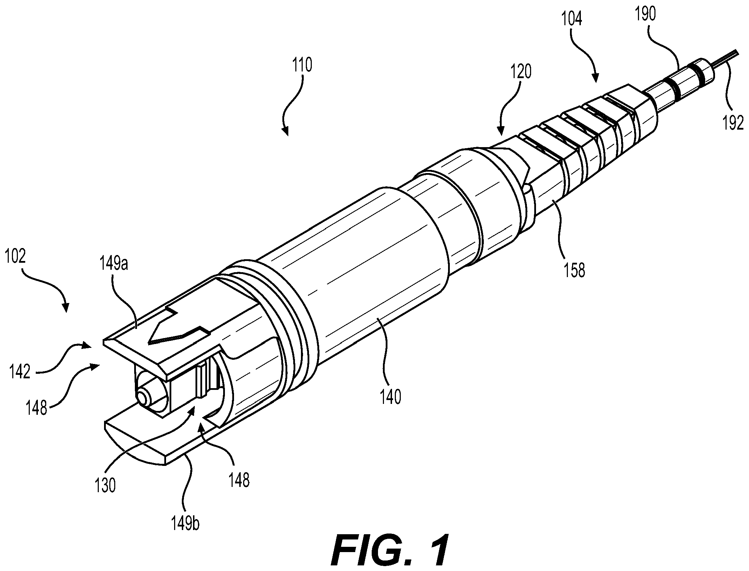

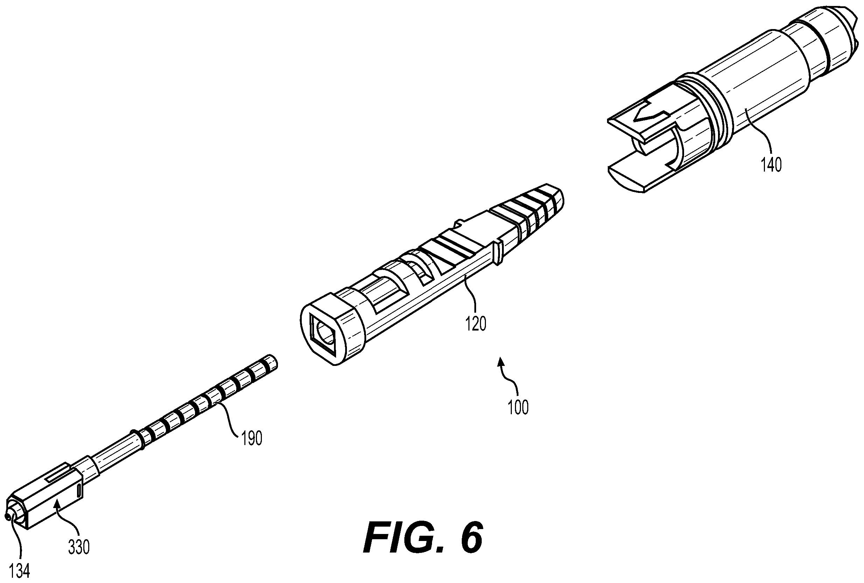

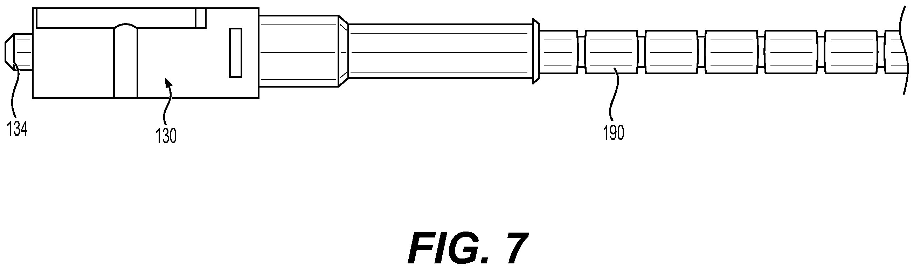

FIGS. 1-8 illustrate an exemplary fiber optical connector 100, for example, a hardened fiber optic connector, for terminating an optical fiber cable 190. The optical fiber cable 190 may include one or more fibers; however, the connector 100 is configured to terminate a single fiber 192. The fiber optical connector 100 includes a forward end 102 configured to be coupled with a fiber optic receptacle and a rearward end 104 into which the optical fiber cable 190 extends. The fiber optical connector 100 extends in a longitudinal axial direction from the forward end 102 to the rearward end 104. It should be appreciated that the mating between the fiber optical connector 100 and the receptacle may be secured using a threaded engagement, a quarter-turn lock, a quick release, a push-pull latch, or a bayonet configuration.

The connector 100 includes an inner housing 120, a connector sub-assembly 130, an outer housing 140, and a crimp sleeve 180. The outer housing 140 surrounds at least a portion of the inner housing 120 and the connector sub-assembly 130, and the inner housing 120 is a single piece of unitary construction (i.e., a monolithic structure). Outer housing 140 may include a rigid material that is sufficient to withstand environmental conditions.

The fiber optical connector 100 uses a connector subassembly 130 of the SC type, but other types of connector assemblies such as LC, FC, ST, MT, and MT-RJ are contemplated by the present invention by using a suitable crimp housing. As illustrated, the connector sub-assembly 130 may be an industry standard SC type connector assembly having a connector body 132, a ferrule 134 in a ferrule basket 135, a spring 136, and a mandrel 138. As would be understood by persons skilled in the art, the ferrule 134 is held by the ferrule basket 135, which is axially slidable relative to the connector body 132 against a force of the spring 136 as limited by the connector body 132 and the mandrel 138.

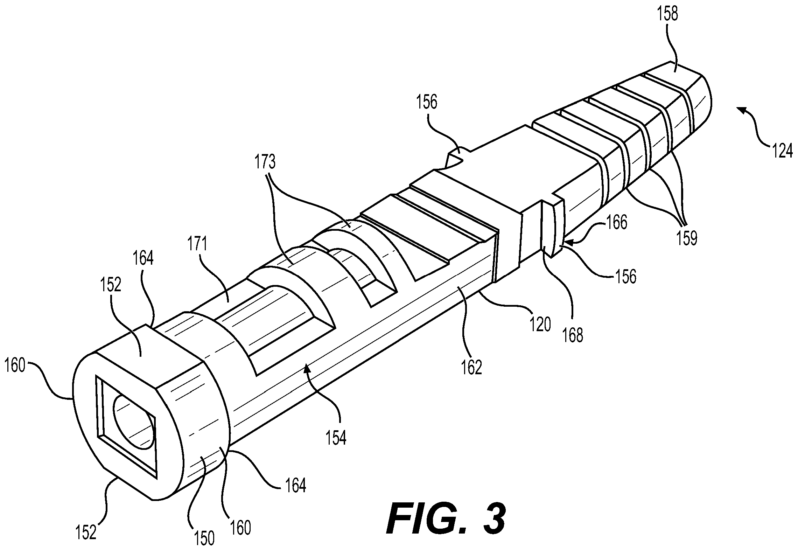

As shown in FIG. 3, the inner housing 120 includes a first end 122 toward the forward end 102 of the connector 100 and a second end 124 toward the rearward end 104 of the connector 100. The inner housing 120 includes a forward flange portion 150 having flattened outer peripheral portions 152 at opposed top and bottom regions of the forward flange portion 150. The flattened peripheral portions 152 of the forward flange portion 150 are configured to engage complementary portions of the outer housing 140 to prevent rotation of the inner housing 120 relative to the outer housing 140.

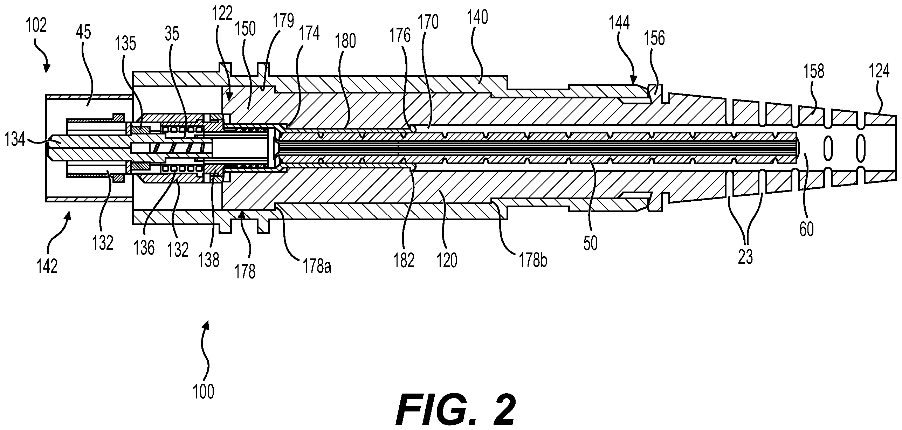

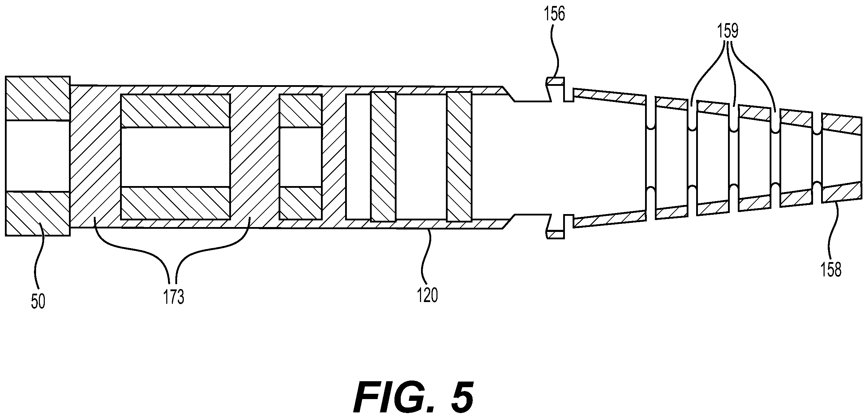

Referring to FIGS. 2 and 5, the inner housing 120 includes a body portion 154 extending from the forward flange portion 150 to a rearward flange portion 156 in the longitudinal direction and a boot portion 158 that extends rearward from the rearward flange portion 156 in the longitudinal direction. The boot portion 158 may be made from any conventional bendable material to provide strain relief for the cable 190. The boot portion 158 may include one or more notched portions 159 to enhance bendability of the boot portion 158. The boot portion 158 of the inner housing 120 may be a flexible member that provides an interface between the connector 100 and the optical fiber cable 190 and permits the optical fiber cable 190 to bend and/or and rotate relative to the connector 100.

The forward flange portion 156 includes a pair of opposed outer side walls 160 between the flattened peripheral portions 152 at the top and bottom regions. The body portion 154 has opposed outer side walls 162 aligned with the side walls 160 in the longitudinal direction. A side wall 162 to side wall 162 dimension in a transverse direction perpendicular to the longitudinal direction is less than a side wall 160 to side wall 160 dimension in the transverse direction. Thus, the inner housing 120 defines radially-extending surfaces 164 at the interface between the side walls 160 and the side walls 162 that face rearward in the longitudinal direction. Similarly, the rearward flange portion 156 includes a pair of opposed side walls 166 aligned with the side walls 160 and the side walls 162 in the longitudinal direction. A side wall 162 to side wall 162 dimension in a transverse direction perpendicular to the longitudinal direction is less than a side wall 166 to side wall 166 dimension in the transverse direction. Thus, the inner housing 120 defines radially-extending surfaces 168 at the interface between the side walls 166 and the side walls 162 that face forward in the longitudinal direction. As discussed in more detail below, the rearward facing surfaces 164 and the forward facing surfaces 168 are configured to secure the outer housing 140 to the inner housing 120.

As shown in FIG. 2, the inner housing 120 has an inner wall 170 that extends in the longitudinal direction and a projection extending inward from the inner wall 170. The projection may be an annular projection or one or more axial projections that are spaced apart from one another about the periphery of the inner wall 170. The projection thus defines a radially-extending surface 174 that faces forward in the longitudinal direction and a radially-extending surface 176 that faces rearward in the longitudinal direction.

The outer housing 140 has a generally cylindrical shape with a first end 142 and a second end 144. The outer housing 140 generally protects the connector sub-assembly 130 and in some embodiments may also key the fiber optical connector 100 with the respective mating receptacle. Moreover, the outer housing 140 includes a through passageway between the first end 142 and the second end 144. As mentioned above, the passageway of the outer housing 140 is keyed so that inner housing 120 is inhibited from rotating when the fiber optical connector 100 is assembled. For example, an inner surface 178 of the outer housing includes flattened regions 179 that are configured to receive the complementary flattened peripheral portions 152 of the forward flange portion 150 to prevent rotation of the inner housing 120 relative to the outer housing 140. Additionally, the inner surface 178 of the outer housing 140 forming the passageway has one or more internal shoulders 178a, 178b configured to inhibit the inner housing 120 from being inserted into the outer housing 140 beyond a predetermined position.

The outer housing 140 includes at least one opening 148 extending from a medial portion of the outer housing 140 to the first end 142. In this case, the outer housing 140 includes a pair of opposed openings 148 at the first end 142, thereby defining alignment portions or fingers 149a, 149b. In addition to aligning the outer housing 140 with the receptacle during mating, alignment fingers 149a, 149b may protect the connector subassembly 130.

As shown in FIG. 1, the alignment fingers 149a, 149b may have different shapes and/or sizes so that the connector 100 can only mate with the receptacle in one orientation. It should be appreciated that the alignment fingers 149a, 149b may include alignment indicia so that a technician can quickly and easily mate the connector 100 with the receptacle. After the alignment fingers 149a, 149b are seated into the receptacle, the technician can engage the external threads of a coupling nut (not shown) with complementary internal threads of the receptacle to provide a secure optical connection.

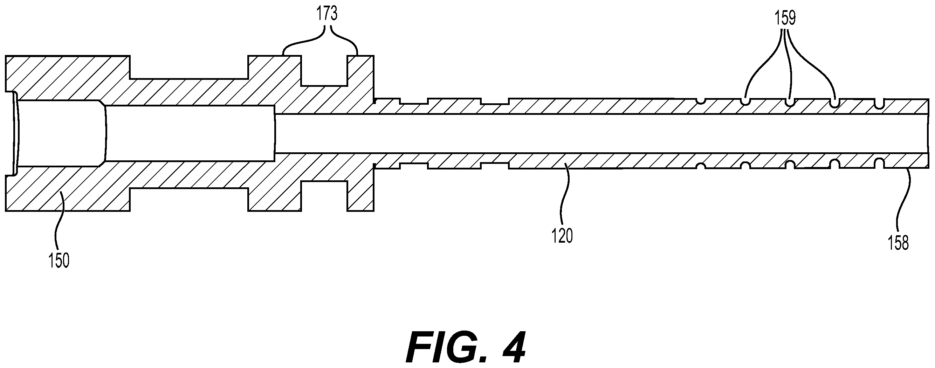

As best illustrated in FIGS. 3 and 4, the inner housing 120 has a generally flat outer wall 171 at top and bottom regions between the side walls 162. The inner housing 120 further includes one or more projections 173 extending outward from the outer wall 171. The one or more projections 173 are configured to substantially match the inner surface 178 of the outer housing 140 to seal the passageway. The portions of the flat outer wall 171 without the one or more projections facilitate sealing by the one or more projections 173 and reduce the overall material thickness to assist with the molding process, as would be understood by persons skilled in the art.

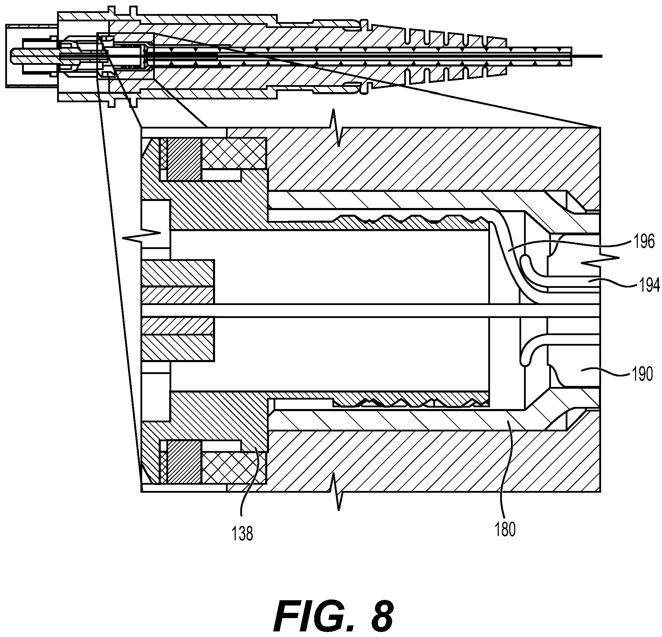

Referring to FIGS. 2 and 8, the connector 100 includes a crimp ferrule 194 configured to be inserted into the fiber optic cable 190 between the one or more fibers 192 and an outer jacket 196 of the cable 190. The crimp ferrule 194 protects the one or more fibers 192 during termination of the cable 190 with the connector 100. The fiber optic cable 190 may includes one or more strengthening members 198, for example, Kevlar strands that run through the length of the fiber optic cable 190 along side the one or more fibers 192.

As shown in FIG. 8, the crimp sleeve 180 extends over a rear portion of the mandrel 138 to a shoulder portion 139 of the mandrel 138 and over a forward portion of the fiber optic cable 190. The crimp sleeve 180 includes an annular barb 182 or one or more circumferential barb portions at its rearward end that are configured to secure the inner housing 120 relative to the crimp sleeve 180. In particular, the projection that extends inward from the inner wall 170 is retained between a tapered region 184 of the crimp sleeve 180, which results from crimping onto the mandrel 138, and the annular barb 182.

With one of the strengthening members 198 disposed on a radially outer surface of the mandrel 138, the crimp sleeve 180 is crimped onto the mandrel 138 and the fiber optic cable 190 to secure the connector sub-assembly 130 to the fiber optic cable 190.

When terminating the fiber optic cable 190 with the connector 100, which typically occurs at a manufacturing facility, the coupling nut and the outer housing 140 are slid over the fiber optic cable 190, followed by the inner housing 120 and then the mandrel 138. The crimp ferrule 194 is then inserted into the end of the fiber optic cable 190. A fiber 192 of the cable 190 is terminated with the ferrule 134, and the connector sub-assembly 130 is placed adjacent the fiber optic cable 190. A strengthening member 198 may be placed onto an outer surface of the rear portion of the mandrel 138. The crimp sleeve 180 is then moved forward over the rearward portion of the mandrel 138 until reaching the shoulder 139, while the rear portion of the mandrel 138 surrounds the fiber optic cable 190. The crimp sleeve 190 is crimped onto the mandrel 138 and the fiber optic cable 190 to secure the cable 190 to the connector sub-assembly 130.

Next, the inner housing 120 is slid forward until the projection that extends inward from the inner wall 170 is retained between the tapered region 184 of the crimp sleeve 180 and the annular barb 182 at the rearward end of the crimp sleeve 180. The elastic nature of the inner housing 120, which is made, for example, from rubber or any known elastomer, enables the inner housing 120 to defect over the annular barb 182 and onto the outer surface of the inner housing 120. The outer housing 140 is the slide forward over the inner housing 120 until a shoulder 141 of the outer housing 140 reaches the rearward facing surfaces 164 of the inner housing 120 and the rear end 144 of the outer housing 140 is positioned forward of the forward facing surfaces 168 of the rearward flange portion 156. The coupling nut can then be slid forward to a position limited by projections from the outer surface of the outer housing so as to be configured to couple the connector 100 to the receptacle.

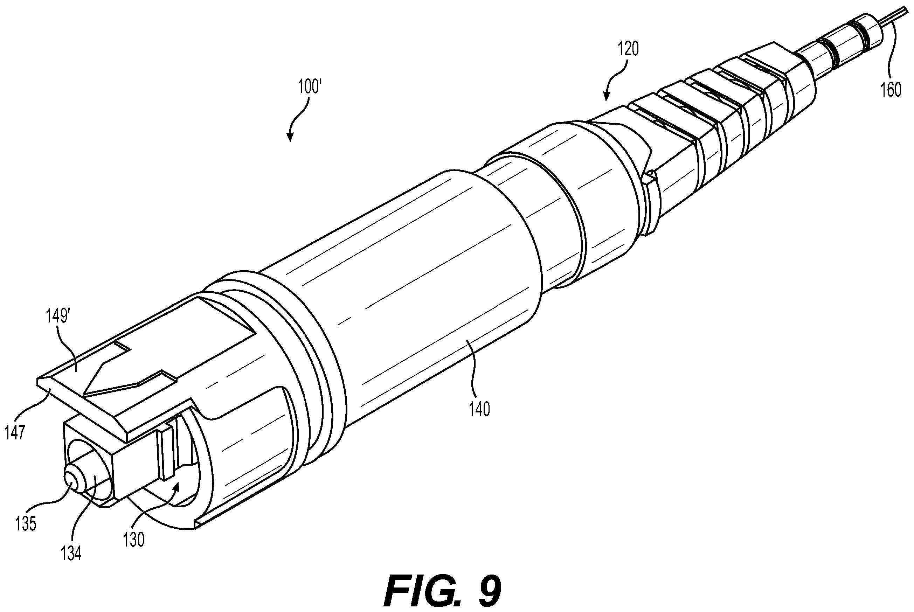

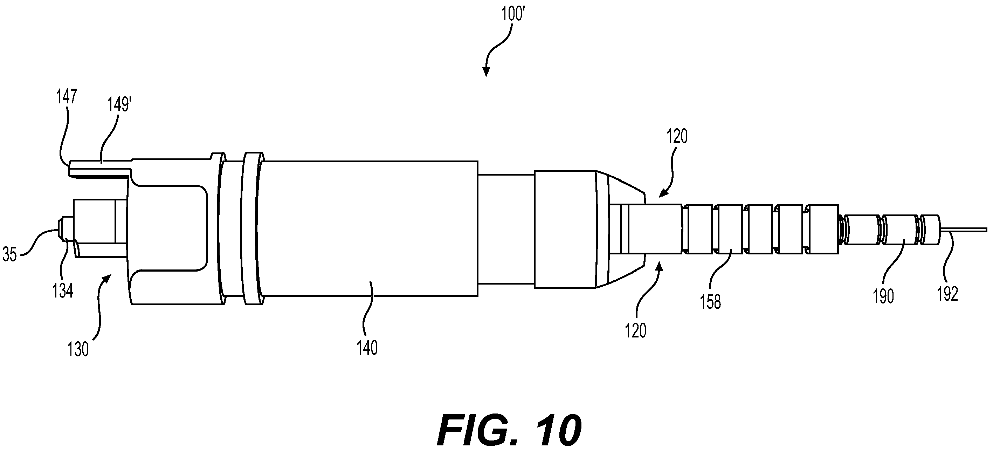

FIGS. 9 and 10 illustrate another exemplary fiber optical connector 100', for example, a hardened fiber optic connector, for attachment of an optical fiber cable with a ferrule. Connector 100' includes the inner housing 120, the connector sub-assembly 130, and the crimp sleeve 180 as described above in connection with the embodiment of FIGS. 1-8. The outer housing 140' is similar to the outer housing 140 described above, but the first end 142' of the outer housing 140' includes only a single projection 149' disposed radially outward of ferrule housing sub-assembly 130. Also, as shown in FIG. 10, the single projection 149' has a length configured such that a forward end 147 of the projection 149' does not extend beyond a forward end 135 of the ferrule 134 of the ferrule housing sub-assembly 130.

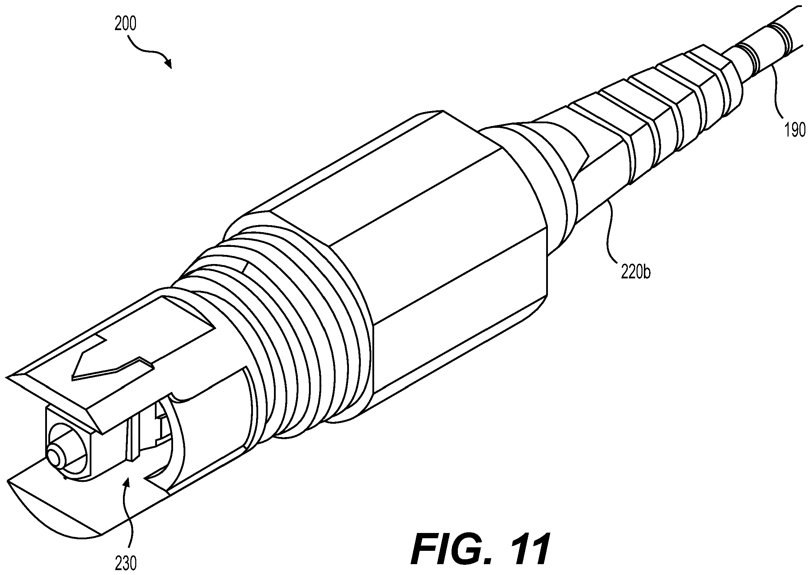

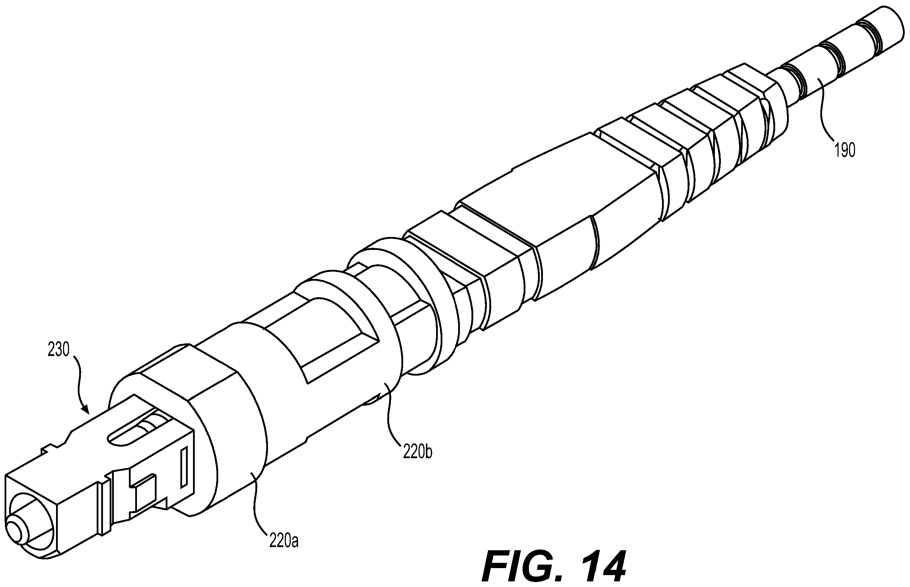

FIGS. 11-15 illustrate another exemplary fiber optical connector 200, for example, a hardened fiber optic connector, for attachment of an optical fiber cable with a ferrule. The connector 200 includes a connector sub-assembly 230, an outer housing 240, and a crimp sleeve 280, which are similar to the same parts described above in connection with the embodiment of FIGS. 1-8. The connector 200 further includes a first inner housing 220a and a second inner housing 220b. The outer housing 240 surrounds the first inner housing 220a and at least a portion of the second inner housing 220a and the connector sub-assembly 230. The first inner housing 220a is constructed of a relatively rigid plastic that is more rigid that the second inner housing 220b, which is constructed of rubber or an elastomer. Outer housing 240 may include a rigid material that is sufficient to withstand environmental conditions.

The fiber optical connector 200 uses a connector subassembly 230 of the SC type, but other types of connector assemblies such as LC, FC, ST, MT, and MT-RJ are contemplated by the present invention by using a suitable crimp housing. As illustrated, the connector sub-assembly 230 may be an industry standard SC type connector assembly having a connector body 232, a ferrule 234 in a ferrule basket 235, a spring 236, and a mandrel 238. As would be understood by persons skilled in the art, the ferrule 234 is held by the ferrule basket 235, which is axially slidable relative to the connector body 232 against a force of the spring 236 as limited by the connector body 232 and the mandrel 238.

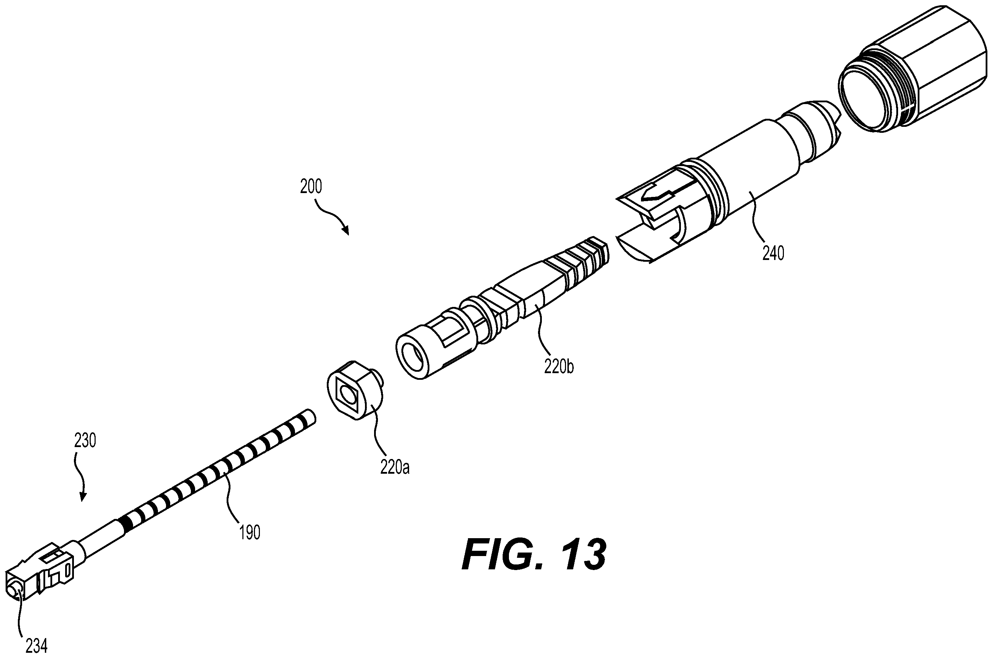

As shown in FIG. 13, the first inner housing 220a is disposed toward the forward end 202 of the connector 200 relative to the second inner housing 220b. The first inner housing 220a has a first forward end 222 configured to engage a shoulder 278 defined by an inner surface 278 of the outer housing 240 to limit the distance that the first inner housing 220a can move in the forward direction relative to the outer housing 240. A second rearward end 224 of the first inner housing 220a includes a radially outward extending barb 225 toward the rearward end 204 of the connector 200. The first forward end 222 of the first inner housing 220a includes flattened outer peripheral portions 252 at opposed top and bottom regions of the first inner housing 220a. The flattened peripheral portions 252 are configured to engage complementary portions of the outer housing 240 to prevent rotation of the first inner housing 220a relative to the outer housing 240.

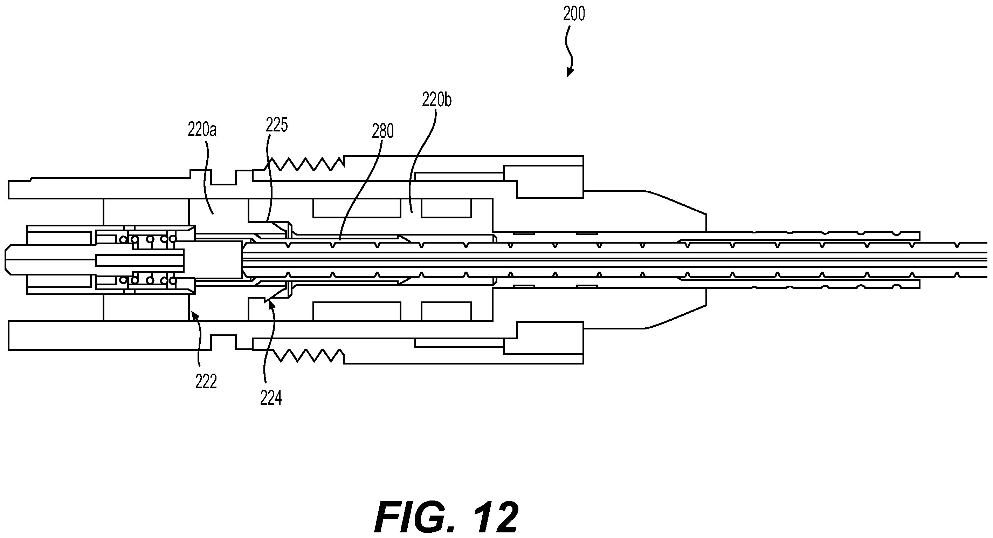

Referring to FIGS. 12 and 13, the second inner housing 220b includes a body portion 254 extending from the first inner housing 220a to a rearward boot portion 258 that extends rearward in the longitudinal direction. The boot portion 258 may be made from any conventional bendable material to provide strain relief for the cable 190. The boot portion 258 may include one or more notched portions 259 to enhance bendability of the boot portion 258. The boot portion 258 of the second inner housing 220b may be a flexible member that provides an interface between the connector 200 and the optical fiber cable 190 and permits the optical fiber cable 190 to bend and/or and rotate relative to the connector 200.

As shown in FIG. 12, the second inner housing 220b has an inner wall 270 that extends in the longitudinal direction and a projection 272 extending inward from the inner wall 270. The projection 272 may be an annular projection or one or more axial projections that are spaced apart from one another about the periphery of the inner wall 270. The projection 272 thus defines a radially-extending surface 274 that faces forward in the longitudinal direction and a radially-extending surface 276 that faces rearward in the longitudinal direction.

The outer housing 240 has a generally cylindrical shape with a first end 242 and a second end 244. The outer housing 240 generally protects the connector sub-assembly 230 and in some embodiments may also key the fiber optical connector 200 with the respective mating receptacle. Moreover, the outer housing 240 includes a through passageway between the first end 242 and the second end 244. As mentioned above, the passageway of the outer housing 240 is keyed so that the first inner housing 220a is inhibited from rotating when the fiber optical connector 200 is assembled. For example, an inner surface 278 of the outer housing includes flattened regions 279 that are configured to receive the complementary flattened peripheral portions 252 of the forward flange portion 250 to prevent rotation of the first inner housing 220a relative to the outer housing 240. Additionally, the inner surface 278 of the outer housing 240 forming the passageway has the shoulder 278 configured to inhibit the first inner housing 220a from being inserted into the outer housing 240 beyond a predetermined position.

The outer housing 240 includes at least one opening 248 extending from a medial portion of the outer housing 240 to the first end 242. In this case, the outer housing 240 includes a pair of opposed openings 248 at the first end 242, thereby defining alignment portions or fingers 249a, 249b. In addition to aligning the outer housing 240 with the receptacle during mating, alignment fingers 249a, 249b may protect the connector sub-assembly 230.

As shown in FIG. 11, the alignment fingers 249a, 249b may have different shapes and/or sizes so that the connector 200 can only mate with the receptacle in one orientation. It should be appreciated that the alignment fingers 249a, 249b may include alignment indicia so that a technician can quickly and easily mate the connector 200 with the receptacle. After the alignment fingers 249a, 249b are seated into the receptacle, the technician can engage the external threads of a coupling nut (not shown) with complementary internal threads of the receptacle to provide a secure optical connection.

As best illustrated in FIG. 13, the second inner housing 220b has a generally flat outer wall 271 at top and bottom regions between the side walls 262. The second inner housing 220b further includes one or more projections 273 extending outward from the outer wall 271. The one or more projections 273 are configured to substantially match the inner surface 278 of the outer housing 240 to seal the passageway. The portions of the flat outer wall 271 without the one or more projections facilitate sealing by the one or more projections 273 and reduce the overall material thickness to assist with the molding process, as would be understood by persons skilled in the art.

Referring to FIG. 2, the connector 200 includes a crimp ferrule 294 configured to be inserted into the fiber optic cable 190 between the one or more fibers 192 and an outer jacket 196 of the cable 190. The crimp ferrule 294 protects the one or more fibers 192 during termination of the cable 190 with the connector 200. The fiber optic cable 190 may includes one or more strengthening members 198, for example, Kevlar strands that run through the length of the fiber optic cable 190 along side the one or more fibers 192.

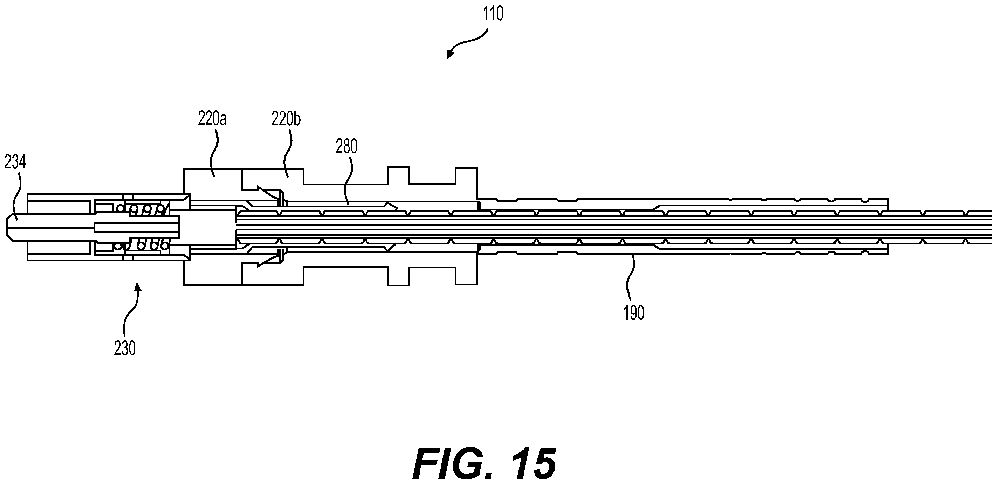

As shown in FIGS. 12 and 15, the crimp sleeve 280 extends over a rear portion of the mandrel 238 to a shoulder portion 239 of the mandrel 238 and over a forward portion of the fiber optic cable 190. The crimp sleeve 280 includes an annular barb 282 or one or more circumferential barb portions at its rearward end that are configured to secure the second inner housing 220b relative to the crimp sleeve 280. With one of the strengthening members 198 disposed on a radially outer surface of the mandrel 238, the crimp sleeve 280 is crimped onto the mandrel 238 and the fiber optic cable 190 to secure the connector sub-assembly 230 to the fiber optic cable 190.

The foregoing description of exemplary embodiments provides illustration and description, but is not intended to be exhaustive or to limit the embodiments described herein to the precise form disclosed. Modifications and variations are possible in light of the above teachings or may be acquired from practice of the embodiments.

Although the invention has been described in detail above, it is expressly understood that it will be apparent to persons skilled in the relevant art that the invention may scope be modified without departing from the of the invention. Various changes of form, design, or arrangement may be made to the invention without departing from the scope of the invention. Therefore, the above mentioned description is to be considered exemplary, rather than limiting, and the scope of the invention is that defined in the following claims.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the phrase "based on" is intended to mean "based, at least in part, on" unless explicitly stated otherwise.

## Claims

1. A fiber optic connector for terminating a fiber optic cable, the connector comprising:
an inner housing (120; 220a, 220b);
an outer housing (140; 140'; 240) disposed radially outward of the inner housing (120; 220a, 220b);
a connector sub-assembly (130; 230) that includes a ferrule basket (135; 235) configured to receive a ferrule (134; 234) that terminates a fiber of the fiber optic cable (190); and
a crimp sleeve (180; 280) that is configured to surround and to be crimped onto a rearward portion of the connector sub-assembly (130; 230) and configured to surround and to be crimped onto an end portion of the fiber optic cable (190),
wherein the inner housing (120; 220a, 220b) is configured to be securely disposed about the crimp sleeve (180; 280), and
wherein the outer housing (140; 140'; 240) is configured to be securely disposed about the inner housing (120; 220a, 220b),
wherein the crimp sleeve (180; 280) is configured to be crimped onto a mandrel (138; 238) at a rear end of the connector sub-assembly (130; 230); and
wherein the crimp sleeve (180) extends over a rear portion of the mandrel (138; 238) to a shoulder portion (139; 239) of the mandrel (138; 238) and is configured to extend over a forward portion of the fiber optic cable (190);
**characterized in that** the crimp sleeve (180; 280) includes an annular barb (182; 282) or one or more circumferential barb portions at its rearward end that are configured to secure the inner housing (120; 220b) relative to the crimp sleeve (180; 280).

2. The fiber optic connector of claim 1, wherein the inner housing (120; 220a, 220b) includes a first end (122) toward a forward end of the connector and a second end (124) toward the rearward end of the connector,
wherein the inner housing (120; 220a, 220b) includes a forward flange portion (150) having flattened outer peripheral portions (152) at opposed top and bottom regions of the forward flange portion, and
wherein the flattened peripheral portions (152) of the forward flange portion (150) are configured to engage complementary portions of the outer housing (140; 140'; 240) to prevent rotation of the inner housing (120; 220a, 220b) relative to the outer housing (140; 140'; 240).

3. The fiber optic connector of claim 2, wherein the inner housing (120; 220a, 220b) comprises:
a body portion (154) extending from the forward flange portion (150) to a rearward flange portion (156) in the longitudinal direction; and
a boot portion (158) that extends rearward from the rearward flange portion (156) in the longitudinal direction.

4. The fiber optic connector of claim 3 wherein the boot portion (158) is made from rubber or an elastomer to provide strain relief for the fiber optic cable (190).

5. The fiber optic connector of claim 3 or 4, wherein the boot portion (158) includes one or more notched portions (159) configured to enhance bendability of the boot portion (158).

6. The fiber optic connector of any one of claims 3-5, wherein the forward flange portion (150) includes a pair of opposed outer side walls (160) between the flattened peripheral portions (152) at the top and bottom regions;
wherein the body portion (154) has opposed outer side walls (162) aligned with the side walls (160) of the forward flange portion (150) in the longitudinal direction; and
wherein a side wall to side wall dimension in a transverse direction perpendicular to the longitudinal direction of the side walls (162) of the body portion (154) is less than a side wall to side wall dimension in the transverse direction of the side walls (160) of the forward flange portion (150), the inner housing (120) defining radially-extending surfaces (164) at the interface, between the side walls (160) of the forward flange portion (150) and the side walls (162) of the body portion (154), that face rearward in the longitudinal direction,
wherein the rearward flange portion (156) includes a pair of opposed side walls (166) aligned with the side walls (160) of the forward flange portion (150) and the side walls (162) of the body portion (154) in the longitudinal direction;
wherein a side wall to side wall dimension in a transverse direction perpendicular to the longitudinal direction of the side walls (162) of the body portion (154) is less than a side wall to side wall dimension in the transverse direction of the side walls (166) of the rearward flange portion (156), the inner housing (120) defining radially-extending surfaces (168) at the interface, between the side walls (166) of the rearward flange portion (156) and the side walls (162) of the body portion (154), that face forward in the longitudinal direction,
wherein the rearward facing surfaces (164) and the forward facing surfaces (168) are configured to secure the outer housing (140) to the inner housing (120).

7. The fiber optic connector of any one of the preceding claims, wherein the inner housing (120) has an inner wall (170) that extends in the longitudinal direction and a projection extending inward from the inner wall (170), optionally wherein the projection is an annular projection or one or more axial projections that are spaced apart from one another about the periphery of the inner wall (170), and wherein the projection defines a radially-extending surface (174) that faces forward in the longitudinal direction and a radially-extending surface (176) that faces rearward in the longitudinal direction.

8. The fiber optic connector of any one of the preceding claims 2-7, wherein the outer housing (140) has a generally cylindrical shape with a first end (142), a second end (144), and a through passageway between the first end (142) and the second end (144);
wherein the outer housing (140) is configured to protect the connector sub-assembly (130) and, optionally, key the fiber optical connector (100) with a respective mating receptacle; and wherein the passageway of the outer housing (140) is keyed so that inner housing (120) is inhibited from rotating when the fiber optical connector (100) is assembled;
in particular an inner surface (178) of the outer housing includes flattened regions (179) that are configured to receive the complementary flattened peripheral portions (152) of the forward flange portion (150) to prevent rotation of the inner housing (120) relative to the outer housing (140), and the inner surface (178) of the outer housing (140) forming the passageway has one or more internal shoulders (178a, 178b) configured to inhibit the inner housing (120) from being inserted into the outer housing (140) beyond a predetermined position.

9. The fiber optic connector of any one of claims 1-8, wherein the inner housing (120) is a single piece of unitary construction; or wherein the inner housing (220a, 220b) comprising a first housing portion and a second housing portion.

10. The fiber optic connector of claim 9, second alternative, wherein the first housing portion and the second housing portion are separate structures that are configured to be coupled to one another.

11. The fiber optic connector of claim 10, wherein the first housing portion is constructed of a plastic and the second housing portion is constructed of a rubber or an elastomer, such that the first housing portion is more rigid than the second housing portion.

12. The fiber optic connector of claim 7, wherein the projection that extends inward from the inner wall (170) is retained between a tapered region (184) of the crimp sleeve (180), which results from crimping onto the mandrel (138), and the annular barb (182).

13. The fiber optic connector of any one of claims 1-12, wherein the connector sub-assembly (130; 230) comprises:
a connector body (132; 232); and
a ferrule (134; 234) held by a ferrule basket (135; 235), which is axially slidable relative to the connector body (132; 232) against a force of a spring,
wherein a sliding range of the ferrule (134; 234) and ferrule basket (135; 235) is limited by the connector body (132; 232) and the mandrel (138; 238).

## Patentansprüche

1. Faseroptische Verbindungseinheit zum Beenden eines faseroptischen Kabels, wobei die Verbindungseinheit umfasst:
ein inneres Gehäuse (120; 220a, 220b);
ein äußeres Gehäuse (140; 140'; 240), welches radial außerhalb des inneren Gehäuses (120; 220a, 220b) angeordnet ist;
eine Verbindungseinheit-Unteranordnung (130; 230), welche einen Hülsenkorb (135; 235) umfasst, welcher dazu eingerichtet ist, eine Hülse (134; 234) aufzunehmen, welche eine Faser des faseroptischen Kabels (190) beendet; und
eine Crimp-Buchse (180; 280), welche dazu eingerichtet ist, einen hinteren Abschnitt der Verbindungseinheit-Unteranordnung (130; 230) zu umgeben und darauf gecrimpt zu sein und dazu eingerichtet ist, einen Endabschnitt des faseroptischen Kabels (190) zu umgeben und darauf gecrimpt zu sein,
wobei das innere Gehäuse (120; 220a, 220b) dazu eingerichtet ist, um die Crimp-Buchse (180; 280) sicher angeordnet zu sein, und
wobei das äußere Gehäuse (140; 140'; 240) dazu eingerichtet ist, um das innere Gehäuse (120; 220a, 220b) sicher angeordnet zu sein,
wobei die Crimp-Buchse (180; 280) dazu eingerichtet ist, auf einen Dorn (138; 238) an einem hinteren Ende der Verbindungseinheit-Unteranordnung (130; 230) gecrimpt zu sein; und
wobei die Crimp-Buchse (180) sich über einem hinteren Abschnitt des Dorns (138; 238) zu einem Schulterabschnitt (139; 239) des Dorns (138; 238) hin erstreckt und dazu eingerichtet ist, sich über einen vorderen Abschnitt des faseroptischen Kabels (190) zu erstrecken;
**dadurch gekennzeichnet, dass** die Crimp-Buchse (180; 280) einen ringförmigen Widerhaken (182; 282) oder einen oder mehrere umfängliche Widerhakenabschnitte an ihrem hinteren Ende umfasst, welche dazu eingerichtet sind, das innere Gehäuse (120; 220b) relativ zu der Crimp-Buchse (180; 280) zu sichern.

2. Faseroptische Verbindungseinheit nach Anspruch 1, wobei das innere Gehäuse (120; 220a, 220b) ein erstes Ende (122) in Richtung eines vorderen Endes der Verbindungseinheit und ein zweites Ende (124) in Richtung des hinteren Endes der Verbindungseinheit umfasst,
wobei das innere Gehäuse (120; 220a, 220b) einen vorderen Flanschabschnitt (150) umfasst, welcher abgeflachte äußere periphere Abschnitte (152) an entgegengesetzten oberen und unteren Bereichen des vorderen Flanschabschnitts aufweist, und
wobei die abgeflachten peripheren Abschnitte (152) des vorderen Flanschabschnitts (150) dazu eingerichtet sind, mit komplementären Abschnitten des äußeren Gehäuses (140; 140'; 240) einzugreifen, um eine Rotation des inneren Gehäuses (120; 220a, 220b) relativ zu dem äußeren Gehäuse (140; 140'; 240) zu verhindern.

3. Faseroptische Verbindungseinheit nach Anspruch 2, wobei das innere Gehäuse (120; 220a, 220b) umfasst:
einen Körperabschnitt (154), welcher sich von dem vorderen Flanschabschnitt (150) zu einem hinteren Flanschabschnitt (156) in der longitudinalen Richtung erstreckt; und
einen Stiefelabschnitt (158), welcher sich nach hinten von dem hinteren Flanschabschnitt (156) in der longitudinalen Richtung erstreckt.

4. Faseroptische Verbindungseinheit nach Anspruch 3, wobei der Stiefelabschnitt (158) aus Gummi oder einem Elastomer hergestellt ist, um Zugentlastung für das faseroptische Kabel (190) bereitzustellen.

5. Faseroptische Verbindungseinheit nach Anspruch 3 oder 4, wobei der Stiefelabschnitt (158) einen oder mehrere gekerbte Abschnitte (159) umfasst, welche dazu eingerichtet sind, eine Biegsamkeit des Stiefelabschnitts (158) zu verbessern.

6. Faseroptische Verbindungseinheit nach einem der Ansprüche 3 bis 5, wobei der vordere Flanschabschnitt (150) ein Paar von entgegengesetzten äußeren Seitenwänden (160) zwischen den abgeflachten peripheren Abschnitten (152) an den oberen und unteren Bereichen umfasst;
wobei der Körperabschnitt (154) entgegengesetzte äußere Seitenwände (162) aufweist, welche mit den Seitenwänden (160) des vorderen Flanschabschnitts (150) in der longitudinalen Richtung ausgerichtet sind; und
wobei eine Seitenwand-zu-Seitenwand-Dimension in einer transversalen Richtung, welche senkrecht zu der longitudinalen Richtung der Seitenwände (162) des Körperabschnitts (154) ist, weniger als eine Seitenwand-zu-Seitenwand-Dimension in der transversalen Richtung der Seitenwände (160) des vorderen Flanschabschnitts (150) ist, wobei das innere Gehäuse (120) sich radial erstreckende Flächen (164) an der Berührungsfläche definiert, zwischen den Seitenwänden (160) des vorderen Flanschabschnitts (150) und den Seitenwänden (162) des Körperabschnitts (154), welche nach hinten in der longitudinalen Richtung weisen,
wobei der hintere Flanschabschnitt (156) ein Paar entgegengesetzter Seitenwände (166) umfasst, welche mit den Seitenwänden (160) des vorderen Flanschabschnitts (150) und den Seitenwänden (162) des Körperabschnitts (154) in der longitudinalen Richtung ausgerichtet sind;
wobei eine Seitenwand-zu-Seitenwand-Dimension in einer transversalen Richtung, welche senkrecht zu der longitudinalen Richtung der Seitenwände (162) des Körperabschnitts (154) ist, weniger als eine Seitenwand-zu-Seitenwand-Dimension in der transversalen Richtung der Seitenwände (166) des hinteren Flanschabschnitts (156) ist, wobei das innere Gehäuse (120) sich radial erstreckende Flächen (168) an der Berührungsfläche definiert, zwischen den Seitenwänden (166) des hinteren Flanschabschnitts (156) und den Seitenwänden (162) des Körperabschnitts (154), welche nach vorne in der longitudinalen Richtung weisen,
wobei die nach hinten weisenden Flächen (164) und die nach vorne weisenden Flächen (168) dazu eingerichtet sind, das äußere Gehäuse (140) an dem inneren Gehäuse (120) zu sichern.

7. Faseroptische Verbindungseinheit nach einem der vorhergehenden Ansprüche, wobei das innere Gehäuse (120) eine innere Wand (170), welche sich in der longitudinalen Richtung erstreckt, und einen Vorsprung aufweist, welcher sich nach innen von der inneren Wand (170) erstreckt, wobei der Vorsprung optional ein ringförmiger Vorsprung oder ein oder mehrere axiale Vorsprünge ist, welche um den Umfang der inneren Wand (170) voneinander beabstandet sind, und wobei der Vorsprung eine sich radial erstreckende Fläche (174), welche nach vorne in der longitudinalen Richtung weisen, und eine sich radial erstreckende Fläche (176) definiert, welche nach hinten in der longitudinalen Richtung weisen.

8. Faseroptische Verbindungseinheit nach einem der Ansprüche 2 bis 7, wobei das äußere Gehäuse (140) eine im Wesentlichen zylindrische Form mit einem ersten Ende (142), einem zweiten Ende (144) und einem Durchgangspassage zwischen dem ersten Ende (142) und dem zweiten Ende (144) aufweist;
wobei das äußere Gehäuse (140) dazu eingerichtet ist, die Verbindungseinheit-Unteranordnung (130) zu schützen und die faseroptische Verbindungseinheit (100) optional mit einem entsprechenden Paarungsstecker zu verzahnen; und
wobei die Passage des äußeren Gehäuses (140) verzahnt ist, sodass das innere Gehäuse (120) daran gehindert ist zu Rotieren, wenn die faseroptische Verbindungseinheit (100) zusammengesetzt ist;
wobei insbesondere eine innere Fläche (178) des äußeren Gehäuses abgeflachte Bereiche (179) umfasst, welche dazu eingerichtet sind, die komplementären abgeflachten peripheren Abschnitte (152) des vorderen Flanschabschnitts (150) aufzunehmen, um eine Rotation des inneren Gehäuses (120) relativ zu dem äußeren Gehäuse (140) zu verhindern, und wobei die innere Fläche (178) des äußeren Gehäuses (140), welche die Passage bildet, eine oder mehrere innere Schultern (178a, 178b) aufweist, welche dazu eingerichtet sind, das innere Gehäuse (120) daran zu hindern, über eine vorbestimmte Position hinaus in das äußere Gehäuse (140) eingeführt zu werden.

9. Faseroptische Verbindungseinheit nach einem der Ansprüche 1 bis 8, wobei das innere Gehäuse (120) ein einzelnes Element eines einheitlichen Aufbaus ist; oder wobei das innere Gehäuse (220a; 220b) einen ersten Gehäuseabschnitt und einen zweiten Gehäuseabschnitt umfasst.

10. Faseroptische Verbindungseinheit nach Anspruch 9, zweite Alternative, wobei der erste Gehäuseabschnitt und der zweite Gehäuseabschnitt separate Strukturen sind, welche dazu eingerichtet sind, miteinander gekoppelt zu sein.

11. Faseroptische Verbindungseinheit nach Anspruch 10, wobei der erste Gehäuseabschnitt aus einem Kunststoff derart aufgebaut ist und der zweite Gehäuseabschnitt aus einem Gummi oder einem Elastomer derart aufgebaut ist, dass der erste Gehäuseabschnitt steifer als der zweite Gehäuseabschnitt ist.

12. Faseroptische Verbindungseinheit nach Anspruch 7, wobei der Vorsprung, welcher sich nach innen von der inneren Wand (170) erstreckt, zwischen einem sich verjüngenden Bereich (184) der Crimp-Buchse (180), welcher aus einem Crimpen auf den Dorn (138) resultiert, und dem ringförmigen Widerhaken (182) gehalten ist.

13. Faseroptische Verbindungseinheit nach einem der Ansprüche 1 bis 12, wobei die Verbindungseinheit-Unteranordnung (130; 230) umfasst:
einen Verbindungseinheitskörper (132; 232); und
eine Hülse (134; 234), welche durch einen Hülsenkorb (135; 235) gehalten ist, welcher relativ zu dem Verbindungseinheitskörper (132; 232) gegen eine Kraft einer Feder axial verschiebbar ist,
wobei ein Verschiebebereich der Hülse (134; 234) und des Hülsenkorbs (135; 235) durch den Verbindungseinheitskörper (132; 232) und den Dorn (138; 238) begrenzt ist.

## Revendications

1. Connecteur de fibre·s optique·s de terminaison d'un câble de fibre·s optique·s, le connecteur comprenant :
un logement interne (120 ; 220a, 220b) ;
un logement externe (140 ; 140' ; 240) disposé radialement vers l'extérieur du logement interne (120 ; 220a, 220b) ;
un sous-ensemble connecteur (130 ; 230) qui inclut un panier de férule (135 ; 235) configuré pour recevoir une férule (134 ; 234) qui termine une fibre du câble de fibre·s optique·s (190) ; et
un manchon de sertissage (180 ; 280) qui est configuré pour entourer et pour être serti sur une portion arrière du sous-ensemble connecteur (130 ; 230) et configuré pour entourer et pour être serti sur une portion d'extrémité du câble de fibre·s optique·s (190),
dans lequel le logement interne (120 ; 220a, 220b) est configuré pour être disposé solidement autour du manchon de sertissage (180 ; 280), et
dans lequel le logement externe (140 ; 140' ; 240) est configuré pour être disposé solidement autour du logement interne (120 ; 220a, 220b),
dans lequel le manchon de sertissage (180 ; 280) est configuré pour être serti sur un mandrin (138 ; 238) au niveau d'une extrémité arrière du sous-ensemble connecteur (130 ; 230) ; et
dans lequel le manchon de sertissage (180) s'étend sur une portion arrière du mandrin (138 ; 238) vers une portion d'épaulement (139 ; 239) du mandrin (138 ; 238) et est configuré pour s'étendre sur une portion avant du câble de fibre·s optiques (190) ;
**caractérisé en ce que** le manchon de sertissage (180 ; 280) inclut une barbe annulaire (182 ; 282) ou une ou plusieurs portions de barbe circonférentielles au niveau de son extrémité arrière qui sont configurées pour fixer solidement le logement interne (120 ; 220b) par rapport au manchon de sertissage (180 ; 280).

2. Connecteur de fibre·s optiques selon la revendication 1, dans lequel le logement interne (120 ; 220a, 220b) inclut une première extrémité (122) vers une extrémité avant du connecteur et une seconde extrémité (124) vers l'extrémité arrière du connecteur,
dans lequel le logement interne (120 ; 220a, 220b) inclut une portion de collerette avant (150) ayant des portions périphériques externes aplaties (152) au niveau de régions opposées de sommet et inférieures de la portion de collerette avant, et
dans lequel les portions périphériques aplaties (152) de la portion de collerette avant (150) sont configurées pour engager des portions complémentaires du logement externe (140 ; 140' ; 240) pour empêcher une rotation du logement interne (120 ; 220a, 220b) par rapport au logement externe (140 ; 140' ; 240).

3. Connecteur de fibre·s optiques selon la revendication 2, dans lequel le logement interne (120 ; 220a, 220b) comprend :
une portion corps (154) s'étendant depuis la portion de collerette avant (150) vers une portion de collerette arrière (156) dans le sens longitudinal ; et
une portion formant capuchon (158) qui s'étend vers l'arrière depuis la portion de collerette arrière (156) dans le sens longitudinal.

4. Connecteur de fibre·s optiques selon la revendication 3, dans lequel la portion formant capuchon (158) est constituée de caoutchouc ou d'un élastomère pour fournir un relâchement de tension pour le câble de fibre·s optique·s (190).

5. Connecteur de fibre·s optique·s selon la revendication 3 ou 4, dans lequel la portion formant capuchon (158) inclut une ou plusieurs portions entaillées (159) configurées pour améliorer l'aptitude à la flexion de la portion formant capuchon (158).

6. Connecteur de fibre·s optique·s selon l'une quelconque des revendications 3 à 5, dans lequel la portion de collerette avant (150) inclut une paire de parois latérales (160) externes opposées entre les portions périphériques aplaties (152) au niveau des régions supérieure et inférieure ;
dans lequel la portion corps (154) présente des parois latérales (162) externes opposées alignées sur les parois latérales (160) de la portion de collerette avant (150) dans le sens longitudinal ; et
dans lequel une dimension de paroi latérale à paroi latérale dans un sens transversal perpendiculaire au sens longitudinal des parois latérales (162) de la portion corps (154) est inférieure à une dimension de paroi latérale à paroi latérale dans le sens transversal des parois latérales (160) de la portion de collerette avant (150), le logement interne (120) définissant des surfaces s'étendant radialement (164) au niveau de l'interface, entre les parois latérales (160) de la portion de collerette avant (150) et les parois latérales (162) de la portion corps (154), qui font face vers l'arrière dans le sens longitudinal,
dans lequel la portion de collerette arrière (156) inclut une paire de parois latérales (166) opposées alignées sur les parois latérales (160) de la portion de collerette avant (150) et sur les parois latérales (162) de la portion corps (154) dans le sens longitudinal ;
dans lequel une dimension de paroi latérale à paroi latérale dans un sens transversal perpendiculaire au sens longitudinal des parois latérales (162) de la portion corps (154) est inférieure à une dimension de paroi latérale à paroi latérale dans le sens transversal des parois latérales (166) de la portion de collerette arrière (156), le logement interne (120) définissant des surfaces s'étendant radialement (168) au niveau de l'interface, entre les parois latérales (166) de la portion de collerette arrière (156) et les parois latérales (162) de la portion corps (154), qui font face vers l'avant dans le sens longitudinal,
dans lequel les surfaces faisant face vers l'arrière (164) et les surfaces faisant face vers l'avant (168) sont configurées pour fixer solidement le logement externe (140) au logement interne (120).

7. Connecteur de fibre·s optique·s selon l'une quelconque des revendications précédentes, dans lequel le logement interne (120) présente une paroi interne (170) qui s'étend dans le sens longitudinal et une projection s'étendant vers l'intérieur depuis la paroi interne (170), éventuellement dans lequel la projection est une projection annulaire ou une ou plusieurs projections axiales qui sont espacées à l'écart l'une de l'autre autour de la périphérie de la paroi interne (170), et dans lequel la projection définit une surface s'étendant radialement (174) qui fait face vers l'avant dans le sens longitudinal et une surface s'étendant radialement (176) qui fait face vers l'arrière dans le sens longitudinal.

8. Connecteur de fibre·s optique·s selon l'une quelconque des revendications précédentes 2 à 7, dans lequel le logement externe (140) présente une forme généralement cylindrique avec une première extrémité (142), une seconde extrémité (144), et une voie de passage traversant entre la première extrémité (142) et la seconde extrémité (144) ;
dans lequel le logement externe (140) est configuré pour protéger le sous-ensemble connecteur (130) et, éventuellement, claveter le connecteur de fibre·s optique·s (100) avec un réceptacle respectif correspondant ; et
dans lequel la voie de passage du logement externe (140) est clavetée de sorte qu'un logement interne (120) est empêché de tourner lorsque le connecteur de fibre·s optiques (100) est assemblé ;
en particulier une surface interne (178) du logement externe inclut des régions aplaties (179) qui sont configurées pour recevoir les portions périphériques aplaties (152) complémentaires de la portion de collerette avant (150) pour empêcher une rotation du logement interne (120) par rapport au logement externe (140), et la surface interne (178) du logement externe (140) formant la voie de passage présente un ou plusieurs épaulements internes (178a, 178b) configurés pour empêcher l'insertion du logement interne (120) dans le logement externe (140) au-delà d'une position prédéterminée.

9. Connecteur de fibre·s optique·s selon l'une quelconque des revendications 1 à 8, dans lequel le logement interne (120) est une pièce unique de construction unitaire ; ou dans lequel le logement interne (220a, 220b) comprenant une première portion de logement et une seconde portion de logement.

10. Connecteur de fibre·s optiques selon la revendication 9, seconde alternative, dans êlequel la première portion de logement et la seconde portion de logement sont des structures séparées qui sont configurées pour être accouplées l'une à l'autre.

11. Connecteur de fibre·s optiques selon la revendication 10, dans lequel la première portion de logement est construite à partir d'une matière plastique et la seconde portion de logement est construite à partir d'un caoutchouc ou d'un élastomère, de sorte que la première portion de logement est plus rigide que la seconde portion de logement.

12. Connecteur de fibre·s optiques selon la revendication 7, dans lequel la projection qui s'étend vers l'intérieur depuis la paroi interne (170) est retenue entre une région effilée (184) du manchon de sertissage (180), qui résulte du sertissage sur le mandrin (138), et la barbe annulaire (182).

13. Connecteur de fibre·s optique·s selon l'une quelconque des revendications 1 à 12, dans lequel le sous-ensemble connecteur (130 ; 230) comprend :
un corps de connecteur (132 ; 232) ; et
une férule (134 ; 234) maintenue par un panier de férule (135 ; 235), qui peut axialement coulisser par rapport au corps de connecteur (132 ; 232) contre une force d'un ressort,
dans lequel une plage de coulissement de la férule (134 ; 234) et du panier de férule (135 ; 235) est limitée par le corps de connecteur (132 ; 232) et le mandrin (138 ; 238).
